# FASCICULE DE BREVET EUROPEEN

(11) **EP 2 726 368 B1**
(45) Date de publication et mention de la délivrance du brevet: **23.03.2016**
(21) Numéro de dépôt: 12730970.6
(22) Date de dépôt: 29.06.2012
(51) Int. Cl.: B63G 8/38, G02B 23/08

(54) **STRUCTURE DE SUPPORT D'AU MOINS DEUX MÂTS HISSABLES, NOTAMMENT POUR UN VÉHICULE SOUS-MARIN**
STÜTZSTRUKTUR FÜR MINDESTENS ZWEI HIEVBARE MASTEN, INSBESONDERE FÜR EIN UNTERWASSERFAHRZEUG
SUPPORT STRUCTURE FOR AT LEAST TWO HOISTABLE MASTS, ESPECIALLY FOR A SUBMARINE VEHICLE

(30) Priorité: 01.07.2011 FR 1155964
(43) Date de publication de la demande: 07.05.2014
(73) Titulaire: DCNS, 75015 Paris (FR)
(72) Inventeur: BIRABEN, Stéphanie, F-83500 LA SEYNE SUR MER (FR); FOUCAUD, Fabien, F-16590 Brie (FR)
(74) Mandataire: Domenego, Bertrand
(86) Numéro de dépôt international: PCT/EP2012/062746
(87) Numéro de publication internationale: WO 2013/004628

(56) Documents cités:
- EP-A1- 0 546 321
- EP-A1- 0 711 702
- EP-A2- 1 177 974
- DE-B3- 10 357 226

## Description

La présente invention concerne des mâts hissables de véhicule sous-marin, également appelés mâts périscopiques. De tels mâts hissables sont généralement destinés à porter des moyens de communication pour le véhicule sous-marin, tels que des antennes radios d'émission et/ou de réception, et/ou de porter des moyens d'exploration et de détection de l'environnement du sous-marin, tels que des antennes radars, des capteurs, ou des périscopes.

On connaît déjà, dans l'état de la technique, un support de mât hissable, comportant des moyens de guidage du mât en translation dans une direction de hissage, permettant de hisser longitudinalement le mât entre une position escamotée à l'intérieur du massif et une position hissée. Ces moyens de guidage n'autorisent le déplacement du mât que dans cette direction de hissage, si bien qu'ils permettent également de maintenir le mât sur le support.

Le support porte également des moyens de fixation sur une partie structurelle du sous-marin, également appelée massif. Ainsi, le mât et son support peuvent être rapportés ensemble, au cours d'une seule opération de montage, dans le véhicule sous-marin.

Habituellement, le support comporte quatre parois encadrant le mât transversalement à la direction de hissage, de façon à former un logement pour ce mât. Ainsi, lorsque le sous-marin comporte plusieurs mâts de ce type, chaque mât est encadré par quatre parois respectives, si bien que l'ensemble des mâts et des supports est relativement encombrant.

Le document EP 0 711 702 A1 divulgue une telle structure de support.

L'invention a notamment pour but de remédier à cet inconvénient en fournissant une structure de support et de guidage moins encombrante, tout en présentant une bonne résistance aux contraintes d'environnement.

A cet effet, l'invention a notamment pour objet une structure de support et de guidage de mâts hissables de véhicule sous-marin, du type comportant :
- un support muni de moyens de guidage en translation dans une direction de hissage pour au moins deux mâts, ce support définissant un espace de logement respectif pour chacun de ces mâts, et
- des moyens de fixation du support sur une partie structurelle du véhicule sous-marin, caractérisé en ce que chaque espace de logement est ouvert, dans sensiblement tout plan perpendiculaire à la direction de hissage, dans une deuxième direction perpendiculaire à cette direction de hissage.

La structure de support selon l'invention délimite une pluralité de logements ouverts, si bien qu'il est moins encombrant qu'un ou plusieurs supports dont les parois encadrent les mâts.

Par ailleurs, l'invention propose d'utiliser un support commun pour plusieurs mâts, si bien qu'elle permet de rapporter une pluralité de mâts dans le véhicule sous-marin en une seule opération de montage.

De manière optionnelle, un ensemble selon l'invention présente l'une ou plusieurs des caractéristiques suivantes, prises seules ou selon toutes les combinaisons techniquement possibles :
- la structure de support et de guidage comporte au moins un montant central, et deux montants latéraux, le montant central et les montants latéraux étant alignés, suivant une direction horizontale perpendiculaire à la direction de hissage et à ladite deuxième direction, chaque paire de montants adjacents définissant l'un desdits espaces de logement ;
- la structure de support et de guidage comporte en outre au moins deux parois, s'étendant chacune entre une paire de montants adjacents ;
- chaque paroi présente une première face, portant des moyens de guidage en translation d'un mât, et une seconde face, opposée à la première, portant des moyens de guidage en translation d'un autre mât ;
- chaque montant central comporte des moyens de guidage en translation pour au moins trois mâts, de préférence pour quatre mâts ;
- chaque montant latéral comporte des moyens de guidage en translation pour au moins un mât, de préférence pour deux mâts ;
- les moyens de fixation comportent des bras de fixation, présentant chacun une première extrémité solidaire du support, et une seconde extrémité libre, destinée à être fixée sur la partie structurelle du véhicule sous-marin.

L'invention concerne également un ensemble d'une structure de support et de guidage et d'au moins deux mâts hissables, dans lequel chaque moyen de guidage comporte un rail de guidage, ménagé sur le support et s'étendant dans la direction de hissage, et dans lequel chaque mât porte, pour chaque rail de guidage de ce mât, au moins un élément de guidage complémentaire destiné à coopérer avec ce rail.

L'invention concerne enfin un véhicule sous-marin du type comportant une partie structurelle de réception d'au moins un mât hissable, et un ensemble dont le support est fixé à cette partie structurelle.

L'invention sera mieux comprise à la lecture de la description qui va suivre, donnée uniquement à titre d'exemple et faite en se référant aux figures annexées parmi lesquelles :
- la figure 1 est une vue en perspective d'un ensemble de mâts et de leur support commun selon un exemple de mode de réalisation de l'invention ;
- la figure 2 est une vue en coupe transversale de l'ensemble de la figure 1, fixé à une partie structurelle d'un véhicule sous-marin.

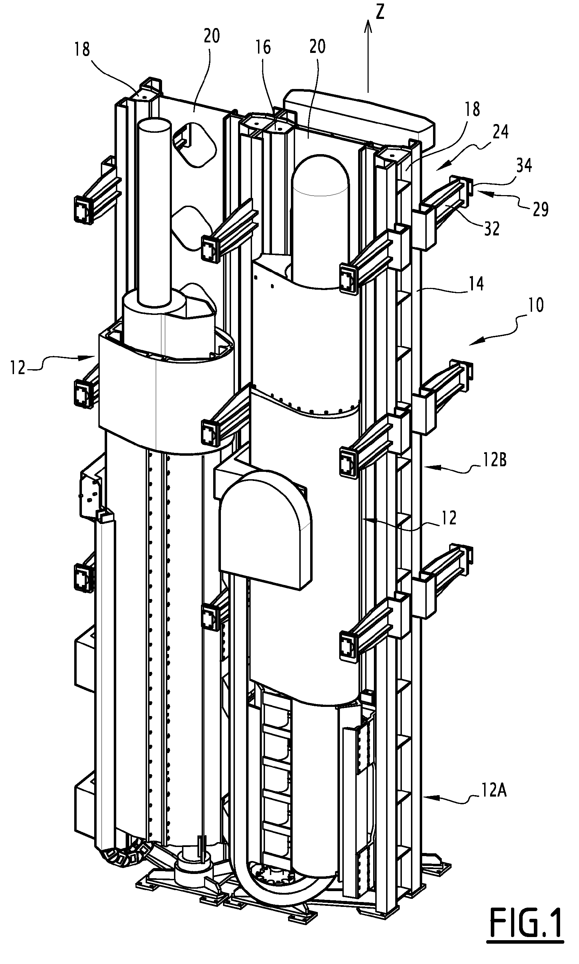

On a représenté sur la figure 1 un ensemble 10 comportant au moins deux, par exemple trois, mâts 12 et un support 14 commun pour ces mâts 12. L'ensemble 10 est destiné à être rapporté sur une partie structurelle 15, également appelée massif, d'un véhicule sous-marin, par exemple de type Andrasta.

De préférence, chaque mât 12 comporte une première partie 12A, destinée à être reliée au support 14 comme cela sera décrit ultérieurement, et une deuxième partie 12B, solidaire de la première 12A, portant des moyens d'intervention. Ces moyens d'intervention comportent par exemple des moyens de communication, tels qu'une antenne radio d'émission et/ou de réception, des moyens d'exploration de l'environnement du sous-marin, tels qu'une antenne radar, un capteur ou un périscope, une tourelle d'armement, ou tous autres moyens susceptibles d'être intégrés dans un mât de sous-marin.

Conformément au mode de réalisation décrit, le support 14 comporte un montant central 16 et deux montants latéraux 18 alignés avec le montant central 16 suivant une direction horizontale X.

Le support 14 comporte également deux parois 20, s'étendant chacune entre le montant central 16 et un montant latéral 18 adjacent respectif.

Chaque paroi 20 présente une première face 20A et une seconde face 20B opposée à la première. Chacune de ces faces 20A, 20B délimite avec la paire de montants 16, 18 entre lesquels la paroi 20 s'étend, un espace de logement 22 pour un mât 12 respectif.

Le mât 12 est relié au support 14 par l'intermédiaire de moyens 24 de guidage du mât en translation dans une direction verticale de hissage Z, pour le hissage et l'affalage de ce mât 12.

Les moyens de guidage 24 comportent par exemple des rails de guidage 26, portés par le support 14 et s'étendant dans la direction de hissage Z. Dans ce cas, chaque mât 12 porte, pour chaque rail de guidage 26, au moins un élément 28 de guidage complémentaire destiné à coopérer avec ce rail 26. De préférence, les éléments de guidage 28 sont portés par la première partie 12A de ce mât 12.

De préférence, les moyens de guidage 24 de chaque mât 12 comportent au moins deux rails de guidage 26 agencés en regard l'un de l'autre, afin de bloquer tout degré de liberté de ce mât 12 transversalement à la direction de hissage Z.

Conformément au mode de réalisation décrit, le montant central 16 comporte des moyens 24 de guidage en translation pour au moins trois mâts 12, de préférence pour quatre mâts. En outre, chaque montant latéral 18 comporte des moyens de guidage 24 pour au moins un mât dans la direction de hissage Z, de préférence pour deux mâts 12. Enfin, la première face 20A de chaque paroi 20 porte des moyens de guidage 24 en translation pour un mât 12 et la seconde face 20B de chaque paroi porte des moyens de guidage en translation pour un autre mât 12.

Ainsi, chaque mât 12 est relié au montant central 16, à un montant latéral 18, et à une face d'une paroi 20, par l'intermédiaire de moyens de guidage 24 respectifs.

Au support 14 sont associés des moyens de fixation 29 sur la partie structurelle 15 du sous-marin.

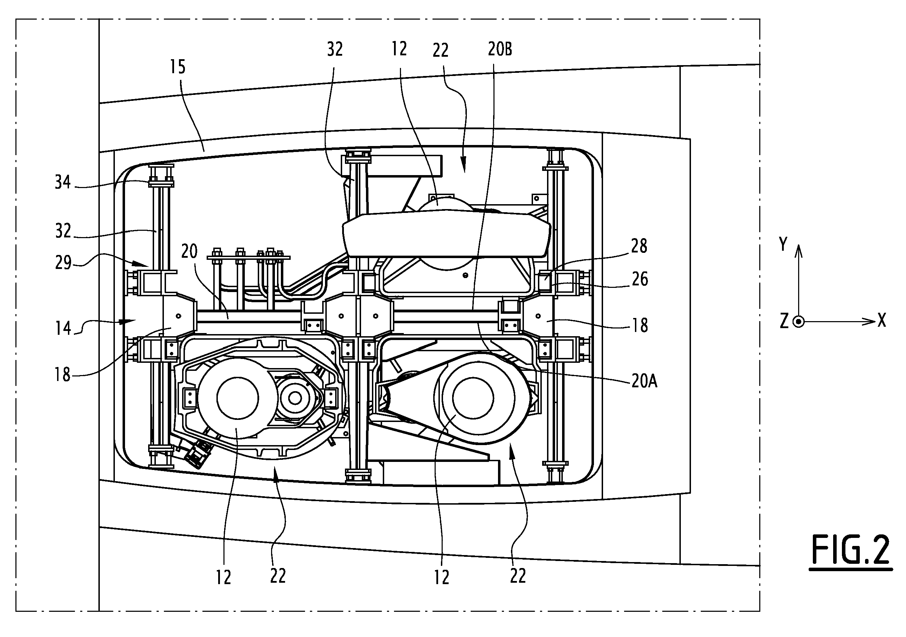

Les moyens de fixation 29 comportent par exemple des bras de fixation 32, présentant chacun une première extrémité solidaire d'un montant central 16 ou latéral 18, et une seconde extrémité libre, destinée à être fixée sur la partie structurelle 15 du sous-marin, comme cela est représenté sur la figure 2. A cet effet, chaque bras de fixation 32 comporte, à sa seconde extrémité, un élément de fixation classique 34.

On notera que les espaces de logement 22 délimités par le support 14 sont ouverts dans tout plan perpendiculaire à la direction de hissage Z, du fait que ce support 14 est constitué uniquement des montants 16, 18 et des parois 20.

Ainsi, en considérant, pour chaque logement 22, une deuxième direction horizontale Y perpendiculaire à la paroi 20, il est possible de prévoir que le mât 12 s'étend au-delà des montants 16, 18 dans cette deuxième direction Y. On notera que le support 14 présente alors une dimension inférieure à celle du mât 12 dans cette deuxième direction Y.

Il apparaît donc clairement qu'un support 14 selon l'invention est moins encombrant qu'un support de l'état de la technique, qui encadre transversalement le mât, et donc qui s'étend au-delà du mât dans toute direction perpendiculaire à la direction de hissage Z.

On notera que l'invention n'est pas limitée au mode de réalisation précédemment décrit.

En particulier, l'ensemble pourrait comporter plusieurs montants centraux alignés, de façon à définir davantage de logements pour des mâts. Par exemple, le support 14 pourrait comporter deux montants centraux et deux montants latéraux tous alignés, et des parois s'étendant entre ces montants, définissant ensemble six logements.

Bien entendu, il est possible de prévoir des logements 22 ne comportant pas de mât, comme cela est représenté sur la figure 2. Dans ce cas, un logement 22 libre peut être utilisé pour loger divers équipements, par exemple des équipements hydrauliques de hissage des mâts logés dans les autres logements.

## Revendications

1. Structure de support et de guidage de mâts hissables (12) de véhicule sous-marin, du type comportant :
- un support (14) muni de moyens (24) de guidage en translation dans une direction de hissage (Z) pour au moins deux mâts (12), ce support définissant un espace (22) de logement respectif pour chacun de ces mâts (12), et
- des moyens (29) de fixation du support sur une partie structurelle (15) du véhicule sous-marin,
**caractérisé en ce que** chaque espace de logement (22) est ouvert, dans tout plan perpendiculaire à la direction de hissage (Z), dans une deuxième direction (Y) perpendiculaire à cette direction de hissage (Z).

2. Structure de support et de guidage selon la revendication 1, comportant au moins un montant central (16), et deux montants latéraux (18), le montant central (16) et les montants latéraux (18) étant alignés, suivant une direction horizontale (X) perpendiculaire à la direction de hissage (Z) et à ladite deuxième direction (Y), chaque paire de montants adjacents définissant l'un desdits espaces de logement (22).

3. Structure de support et de guidage selon la revendication 2, comportant en outre au moins deux parois (20), s'étendant chacune entre une paire de montants (16, 18) adjacents.

4. Structure de support et de guidage selon la revendication 3, dans lequel chaque paroi (20) présente une première face (20A), portant des moyens (24) de guidage en translation d'un mât (12), et une seconde face (20B), opposée à la première (20A), portant des moyens (24) de guidage en translation d'un autre mât (12).

5. Structure de support et de guidage selon l'une quelconque des revendications 2 à 4, dans lequel chaque montant central (16) comporte des moyens (24) de guidage en translation pour au moins trois mâts (12), de préférence pour quatre mâts (12).

6. Structure de support et de guidage selon l'une quelconque des revendications 2 à 5, dans lequel chaque montant latéral (18) comporte des moyens de guidage en translation pour au moins un mât (12), de préférence pour deux mâts (12).

7. Structure de support et de guidage selon l'une quelconque des revendications précédentes, dans lequel les moyens de fixation (29) comportent des bras de fixation (32), présentant chacun une première extrémité solidaire du support (14), et une seconde extrémité libre, destinée à être fixée sur la partie structurelle (15) du véhicule sous-marin.

8. Ensemble (10) d'une structure de support et de guidage selon l'une quelconque des revendications 1 à 7, et d'au moins deux mâts hissables (12), dans lequel chaque moyen de guidage (24) comporte un rail de guidage (26), ménagé sur le support (14) et s'étendant dans la direction de hissage (Z), et dans lequel chaque mât (12) porte, pour chaque rail (26) de guidage de ce mât (12), au moins un élément de guidage (28) complémentaire destiné à coopérer avec ce rail (26).

9. Véhicule sous-marin, du type comportant une partie structurelle (15) de réception d'au moins un mât hissable (12), et un ensemble (10) selon la revendication 8 dont le support (14) est fixé à cette partie structurelle (15).

## Patentansprüche

1. Struktur zum Tragen und Führen von hievbaren Masten (12) für ein Unterwasserfahrzeug, vom Typ, der Folgendes umfasst:
einen Träger (14), der mit Mitteln (24) zum translatorischen Führen in einer Hievrichtung (Z) für mindestens zwei Masten (12) versehen ist, wobei dieser Träger einen jeweiligen Aufnahmeraum (22) für jeden dieser Masten (12) definiert, und
Mittel (29) zum Befestigen des Trägers an einem Strukturteil (15) des Unterwasserfahrzeugs,
**dadurch gekennzeichnet, dass** jeder Aufnahmeraum (22) in jeder Ebene, die zu der Hievrichtung (Z) senkrecht ist, in einer zweiten Richtung (Y), die zu dieser Hievrichtung (Z) senkrecht ist, offen ist.

2. Struktur zum Tragen und Führen nach Anspruch 1, die mindestens einen mittleren Holm (16) und zwei seitliche Holme (18) umfasst, wobei der mittlere Holm (16) und die seitlichen Holme (18) in einer horizontalen Richtung (X), die zu der Hievrichtung (Z) und zu der zweiten Richtung (Y) senkrecht ist, fluchten, wobei jedes Paar benachbarter Holme einen der Aufnahmeräume (22) bildet.

3. Struktur zum Tragen und Führen nach Anspruch 2, die ferner mindestens zwei Wände (20) umfasst, von denen sich jede zwischen einem Paar benachbarter Holme (16, 18) erstreckt.

4. Struktur zum Tragen und Führen nach Anspruch 3, wobei jede Wand (20) eine erste Fläche (20A) mit Mitteln (24) zum translatorischen Führen eines Mastes (12) und eine zweite, der ersten (20A) entgegengesetzte Fläche (20B) mit Mitteln (24) zum translatorischen Führen eines anderen Mastes (12) umfasst.

5. Struktur zum Tragen und Führen nach einem der Ansprüche 2 bis 4, wobei jeder mittlere Holm (16) Mittel (24) zum translatorischen Führen für mindestens drei Masten (12), vorzugsweise für vier Masten (12), umfasst.

6. Struktur zum Tragen und Führen nach einem der Ansprüche 2 bis 5, wobei jeder seitliche Holm (18) Mittel zum translatorischen Führen für mindestens einen Mast (12), vorzugsweise für zwei Masten (12) umfasst.

7. Struktur zum Tragen und Führen nach einem der vorhergehenden Ansprüche, wobei die Mittel zum Befestigen (29) Befestigungsarme (32) umfassen, von denen jeder ein erstes Ende, das fest mit dem Träger (14) verbunden ist, und ein zweites freie Ende, das zur Befestigung an dem Strukturteil (15) des Unterwasserfahrzeugs bestimmt ist, umfasst.

8. Anordnung (10) aus einer Struktur zum Tragen und Führen nach einem der Ansprüche 1 bis 7 und mindestens zwei hievbaren Masten (12), wobei jedes Mittel zum Führen (24) eine Führungsschiene (26) umfasst, die an dem Träger (14) vorgesehen ist und sich in der Hievrichtung (Z) erstreckt, und wobei jeder Mast (12), für jede Führungsschiene (26) dieses Mastes (12), mindestens ein komplementäres Führungselement (28) umfasst, das für das Zusammenwirken mit dieser Schiene (26) bestimmt ist.

9. Unterwasserfahrzeug vom Typ, der einen Strukturteil (15) zum Aufnehmen mindestens eines hievbaren Mastes (12) und eine Anordnung (10) nach Anspruch 8 umfasst, deren Träger (14) an diesem Strukturteil (15) befestigt ist.

## Claims

1. Support and guidance structure for raisable masts (12) of an underwater vehicle, including:
- a support (14) equipped with means of guidance (24) in translation in a raising direction (Z) for at least two masts (12), delimiting a respective housing (22) for each of these masts (12), and
- means of fixation (29) to a structural part (15) of the underwater vehicle, **characterised in that** each housing (22) is open, on all planes perpendicular to the raising direction (Z), in a second direction (Y) perpendicular to this raising direction (Z).

2. Support and guidance structure according to claim 1, including at least one central post (16), and two lateral posts (18), whereby the central (16) and lateral posts (18) are aligned, in a horizontal direction (X) perpendicular to the raising direction (Z) and to the second direction (Y), whereby each pair of adjacent posts delimits one of the aforementioned housings (22).

3. Support and guidance structure according to claim 2, further including at least two walls (20), each extending between a pair of adjacent posts (16, 18).

4. Support and guidance structure according to claim 3, in which each wall (20) has a first surface (20A), bearing means of guidance (24) in translation of a mast (12), and a second surface (20B), opposite the first (20A), bearing means of guidance (24) in translation of another mast (12).

5. Support and guidance structure according to any of claims 2 - 4, in which each central post (16) includes means of guidance (24) in translation for at least three masts (12), preferably for four masts (12).

6. Support and guidance structure according to any of claims 2 - 5, in which each lateral post (18) includes means of guidance in translation for at least one mast (12), preferably for two masts (12).

7. Support and guidance structure according to any of the foregoing claims, in which the fixation means (29) includes mount brackets (32), each having a first end integrated with the support (14), and a second, free, end, to be affixed to the structural part (15) of the underwater vehicle.

8. Assembly of a support and guidance structure according to any of claims 1 - 7, and at least two raisable masts (12), in which each guidance means (24) includes a guide rail (26), arranged on the support (14) and extending in the raising direction (Z), and in which each mast (12) has, for each guide rail (26) of the mast (12), at least one additional guide element (28) to operate in tandem with the rail (26).

9. Underwater vehicle including a structural part (15) for receiving at least one raisable mast (12), and an assembly (10) according to claim 8, in which the support (14) is affixed to this structural part (15).
